(19) Europäisches Patentamt / European Patent Office / Office européen des brevets

(11) **EP 3 085 098 B1**

(12) **FASCICULE DE BREVET EUROPEEN**

(45) Date de publication et mention de la délivrance du brevet:
**29.05.2019 Bulletin 2019/22**

(21) Numéro de dépôt: **14815334.9**

(22) Date de dépôt: **17.12.2014**

(51) Int Cl.:
*H04H 60/40* (2008.01)    *H04N 21/23* (2011.01)
*H04N 21/234* (2011.01)    *H04N 21/61* (2011.01)
*H04N 21/236* (2011.01)    *H04H 20/67* (2008.01)

(86) Numéro de dépôt international:
**PCT/EP2014/078145**

(87) Numéro de publication internationale:
**WO 2015/091603 (25.06.2015 Gazette 2015/25)**

(54) **PROCÉDÉ DE FILTRAGE ET DE SYNCHRONISATION DE FLUX AUDIOVISUELS POUR UNE DIFFUSION TERRESTRE SYNCHRONE**

VERFAHREN ZUR FILTERUNG UND SYNCHRONISATION VON AUDIO-VISUELLEN DATENSTRÖMEN FÜR SYNCHRONEN TERRESTRISCHEN RUNDFUNK

METHOD OF FILTERING AND SYNCHRONISING OF AUDIO-VISUAL DATA STREAMS FOR A SYNCHRONOUS TERRESTRIAL BROADCAST

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **19.12.2013 FR 1363096**

(43) Date de publication de la demande:
**26.10.2016 Bulletin 2016/43**

(72) Inventeurs:
• **POULAIN, Ludovic**
  **F-35510 Cesson Sevigne (FR)**
• **DUPAIN, Pascal**
  **F-92120 Montrouge (FR)**

(74) Mandataire: **Santarelli**
  **49, avenue des Champs-Elysées**
  **75008 Paris (FR)**

(73) Titulaires:
• **Enensys Technologies**
  **35510 Cesson Sévigné (FR)**
• **TDF**
  **92120 Montrouge (FR)**

(56) Documents cités:
**WO-A1-2010/043498    WO-A1-2012/116743**

## Description

La présente invention concerne le domaine de la diffusion de programmes de télévision numérique et plus particulièrement un procédé de filtrage et de synchronisation d'au moins un flux audiovisuel pour une diffusion terrestre synchrone au sein d'au moins une plaque mono fréquence, le flux audiovisuel étant reçu via une liaison dans laquelle le au moins un flux audiovisuel est multiplexé avec au moins un autre flux audiovisuel diffusé par la liaison.

Dans la diffusion de programmes audiovisuels, les flux de données transmis sont marqués temporellement pour permettre une diffusion de ceux-ci.

Lorsqu'au moins un premier flux de données est multiplexé avec d'autres second flux de données, il arrive que le marquage temporel du au moins un premier flux de données soit modifié. Cette modification empêche un dispositif recevant le au moins un flux de données multiplexé de pouvoir retrouver le marquage temporel original du au moins un flux de données. Le dispositif recevant le au moins un flux de données multiplexé avec les seconds flux de données ne peut alors pas synchroniser le au moins un flux premier flux de données pour, par exemple et de manière non limitative, une diffusion SFN (pour *Single Frequency Network* en anglais).

La diffusion SFN se caractérise en ce que la diffusion des services est effectuée par l'émission d'un même flux de données par différents émetteurs sur une seule et même fréquence de modulation. De ce fait, il est nécessaire que ces différents émetteurs reçoivent exactement le même contenu et soient finement synchronisés entre eux pour éviter de générer des interférences dans les endroits se trouvant à la jonction des zones de couverture des différents émetteurs.

Cette synchronisation entre les différents émetteurs SFN peut, par exemple, être réalisée par l'insertion dans le flux distribué à ces émetteurs de paquets de synchronisation tels que les paquets T2-MI *timestamp* (*T2-Modulator Interface*) en anglais qui correspondent dans la norme DVB-T2 aux étiquettes temporelles, et MIP pour (*Mega-frame Initialization Packet* en anglais) utilisées dans les normes DVB-H et DVB-T. Ce mécanisme est décrit dans le document : « Digital Video Broadcasting (DVB); DVB mega-frame for Single Frequency Network (SFN) synchronization Modulator Interface (T2-MI) for a second génération digital terrestrial télévision broadcasting System (DVB-T2)» de l'ETSI (*European Télécommunications Standards Institute* en anglais) sous la référence ETSI TS 102 773 V1.1.1 (2009-09). Le point d'émission recevant le flux se synchronise alors sur le flux reçu, par exemple à l'aide de ces paquets T2-MI de type *DVB-T2 timestamp.* Nous appelons cette synchronisation du point d'émission sur le flux reçu entraînant la synchronisation entre eux de tous les points d'émission, la synchronisation SFN du point d'émission.

La diffusion SFN se caractérise par la définition de plaques SFN. Une plaque SFN est une zone géographique couverte par un ensemble d'émetteurs dont le nombre est supérieur ou égal à un. Ces émetteurs sont finement synchronisés et émettent exactement le même flux de données sur la même fréquence. Une telle diffusion est décrit par exemple dans WO2012/116743 A1.

La présente invention vise à permettre à un dispositif recevant le au moins un flux de données multiplexé avec les seconds flux de données de synchroniser le au moins un premier flux de données pour une diffusion de celui-ci.

L'invention concerne un procédé de filtrage et de synchronisation d'au moins un flux audiovisuel pour une diffusion terrestre synchrone au sein d'au moins une plaque mono fréquence tel que défini par la revendication 1. Le flux audiovisuel est reçu via au moins une liaison dans laquelle le au moins un flux audiovisuel est multiplexé avec au moins un autre flux audiovisuel diffusé par la au moins une liaison. Le procédé comporte les étapes de :

- filtrage parmi les paquets reçus via la au moins une liaison des paquets audiovisuels destinés à la diffusion terrestre synchrone au sein d'au moins une plaque mono fréquence,
- détection, parmi les paquets reçus via la au moins une liaison, de paquets comportant un compteur, calcul de la durée entre deux paquets comportant un compteur et comptage des paquets entre les deux paquets comportant un compteur,
- horodatage de chaque paquet reçu en fonction de la durée calculée et du nombre de paquets décomptés,
- détection de paquets comportant au moins une information représentative d'une horloge de référence commune,
- insertion de paquets nuls entre chaque paquet comportant au moins une information représentative d'une horloge de référence commune,
- horodatage de chaque paquet nul,
- remplacement de chaque paquet nul horodaté par un paquet filtré si le paquet nul a un horodatage supérieur ou égal à celui du paquet reçu filtré,
- mise à jour d'au moins un paquet comportant un compteur dans le flux audiovisuel pour former un flux audiovisuel pour la diffusion terrestre synchrone au sein d'au moins une plaque mono fréquence.

L'invention concerne aussi un dispositif de filtrage et de synchronisation tel que défini par la revendication 10.

Ainsi, il est possible de synchroniser le flux audiovisuel pour une diffusion de celui-ci.

Selon un mode particulier de réalisation de l'invention, le procédé comporte en outre une étape de mise en conformité du flux audiovisuel pour la diffusion terrestre synchrone au sein d'au moins une plaque mono fréquence à une norme de transmission.

Selon un mode particulier de réalisation de l'invention, plusieurs tables sont insérées dans le flux audiovisuel pour la diffusion terrestre synchrone au sein d'au moins une plaque mono fréquence à une périodicité qui dépend de la périodicité d'au moins un bit du compteur.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :

la Fig. la illustre un premier exemple d'architecture d'un système utilisant une liaison satellitaire pour transférer des flux DVB à des dispositifs de diffusion terrestres;

la Fig. 1b illustre un second exemple d'architecture d'un système utilisant deux liaisons satellitaires pour transférer des flux DVB à des dispositifs de diffusion terrestres;

la Fig. 2 représente un module de génération d'un étiquetage temporel pour une diffusion terrestre synchrone au sein d'une plaque mono fréquence;

la Fig. 3 représente un dispositif de synchronisation d'au moins un flux reçu par une liaison satellitaire pour une diffusion terrestre synchrone au sein d'une plaque mono fréquence;

la Fig. 4a représente un exemple d'algorithme de transfert d'au moins un flux d'un flux DVB par l'intermédiaire d'une liaison satellite pour une diffusion terrestre synchrone au sein d'une plaque mono fréquence selon un premier exemple d'architecture;

la Fig. 4b représente un exemple d'algorithme de transfert de deux flux DVB par l'intermédiaire d'une liaison satellite pour une diffusion terrestre synchrone au sein d'une plaque mono fréquence selon le second exemple d'architecture;

la Fig. 5 représente un exemple d'algorithme d'étiquetage temporel pour une diffusion terrestre synchrone au sein d'une plaque mono fréquence;

les Figs. 6a à 6f représentent des exemples d'algorithme de synchronisation d'au moins un flux reçu par une liaison satellitaire pour une diffusion terrestre synchrone au sein d'une plaque mono fréquence.

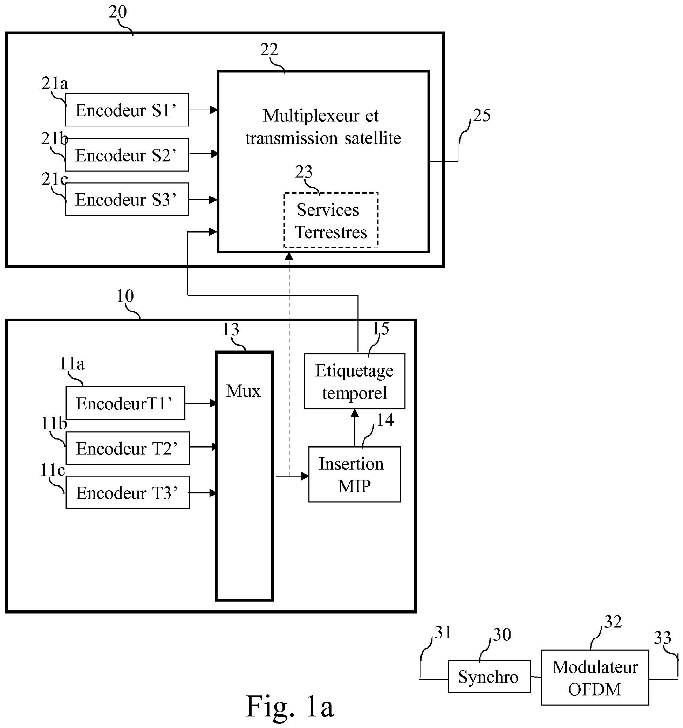

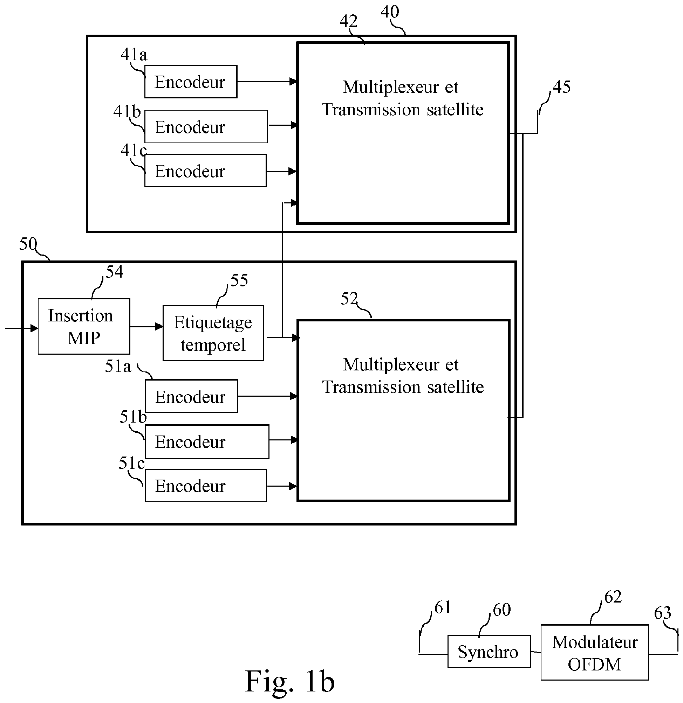

La **Fig. 1a** illustre un premier exemple d'architecture d'un système utilisant une liaison satellitaire pour transférer des flux DVB à des dispositifs de diffusion terrestres.

Le système comporte un dispositif de formation d'au moins un flux DVB 10 pour une diffusion terrestre synchrone au sein d'au moins une plaque mono fréquence.

Le dispositif de formation d'au moins un flux DVB 10 comporte une pluralité d'encodeurs de flux audiovisuels 11a à 11c. Les sorties des encodeurs de flux audiovisuels 11a à 11c sont reliées à un multiplexeur 13 qui multiplexe les différents flux audiovisuels produits par les encodeurs 11a et 11c. La sortie du multiplexeur 13 est reliée à un module d'insertion de paquets MIP 14, acronyme de « Mega frame Initialization packet » ou en français paquet d'initialisation de méga trame. La sortie du module d'insertion de paquets MIP 14 est reliée à un module d'étiquetage temporel 15.

Le module d'insertion de paquets MIP 14 insère dans le multiplexe délivré par le multiplexeur 13, des paquets MIP tels que décrits dans la norme ETSI TS 101 191. Chaque paquet MIP indique le début d'une méga trame et comporte une information représentative d'une horloge de référence commune précise, typiquement une horloge GPS, acronyme de « Global Positioning System ». Le flux ainsi formé est un flux DTT, acronyme de « Digital Terrestrial Television ». Le module d'étiquetage temporel 15 insère dans le flux DTT un étiquetage temporel qui permet à des dispositifs de diffusion terrestre d'effectuer une diffusion terrestre synchrone au sein d'une plaque mono fréquence.

L'étiquetage temporel, sous la forme de paquets contenant un champ PCR tels que décrits dans la norme ISO 13818-1, est préférentiellement introduit dans le flux DTT à la place de paquets nuls du flux DTT à une périodicité de l'ordre de 40ms.

PCR est l'acronyme de « Program Clock Reference ».

Le flux DTT ainsi modifié est transféré à un dispositif de diffusion par satellite d'au moins un flux DVB 20.

Le dispositif de diffusion par satellite d'au moins un flux DVB 20 comporte une pluralité d'encodeurs de flux audiovisuels 21a à 21c. Les sorties des encodeurs de flux audiovisuels 21a à 21c sont reliées à un module de multiplexage et de transmission satellite 22. Le module de multiplexage et de transmission satellite 22 multiplexe les différents flux audiovisuels produits par les encodeurs 21a et 21c ainsi que le flux TDT reçu du dispositif de formation d'au moins un flux DVB 10. La sortie du multiplexeur module de multiplexage et de transmission satellite 22 est reliée à une antenne d'émission 25.

Les flux de données transmis par l'antenne 25 sont reçus par un dispositif de synchronisation et de filtrage 30 via une liaison satellite et par l'intermédiaire d'une antenne 31.

Le dispositif de synchronisation et de filtrage 30 traite au moins les paquets contenant un champ PCR insérés par le module d'étiquetage temporel 15 de manière à fournir une synchronisation qui permet à un modulateur OFDM (32) d'effectuer une diffusion terrestre synchrone au sein d'une plaque mono fréquence.

En variante, les modules d'insertion de paquets MIP 14 et d'étiquetage temporel 15 sont, au lieu d'être compris dans le dispositif de formation d'au moins un flux DVB 10, implémentés dans le dispositif de formation d'au moins un flux DVB 20 sous la référence 23 en Fig. la.

La **Fig. lb** illustre un second exemple d'architecture d'un système utilisant deux liaisons satellitaires pour transférer des flux DVB à des dispositifs de diffusion terrestres.

Le système comporte deux dispositifs de diffusion par satellite 40 et 50 qui diffusent chacun au moins un flux DVB 20 pour une diffusion terrestre synchrone au sein d'au moins une plaque mono fréquence.

Le dispositif de diffusion par satellite d'un flux DVB 40 comporte une pluralité d'encodeurs de flux audiovisuels 41a à 41c. Les sorties des encodeurs de flux audiovisuels 41a à 41c sont reliées à un module de multiplexage et de transmission satellite 42. Le module de multiplexage et de transmission satellite 42 multiplexe les différents flux audiovisuels produits par les encodeurs 41a et 41c ainsi que le flux comportant des paquets MIP et des paquets comportant un étiquetage temporel insérés par le module d'étiquetage temporel décrit ultérieurement. La sortie du module de multiplexage et de transmission satellite 42 est reliée à l'antenne d'émission 45.

Le dispositif de diffusion par satellite d'un flux DVB 50 comporte une pluralité d'encodeurs de flux audiovisuels 51a à 51c. Les sorties des encodeurs de flux audiovisuels 51a à 51c sont reliées à un module de multiplexage et de transmission satellite 52.

Le module de multiplexage temporel 52 est aussi relié à un module d'étiquetage temporel 55 ainsi qu'à un module d'insertion de paquets MIP 54.

Le module d'insertion de paquets MIP 54 insère dans un flux, par exemple constitué de paquets nuls, des paquets MIP tels que décrits dans la norme ETSI TS 101 191. Chaque paquet MIP indique le début d'une méga trame et comporte une information représentative d'une horloge de référence commune précise, typiquement une horloge GPS, acronyme de « Global Positioning System ». La sortie du module d'insertion de paquets MIP 54 est reliée à un module d'étiquetage temporel 55.

Le module d'étiquetage temporel 55 effectue dans le flux délivré par le module d'insertion de paquets MIP 54 un étiquetage temporel qui permet à des dispositifs de diffusion terrestre d'effectuer une diffusion terrestre synchrone au sein d'une plaque mono fréquence.

L'étiquetage temporel, sous la forme de paquets contenant un champ PCR tels que décrits dans la norme ISO 13818-1, est préférentiellement introduit dans le flux délivré par le module d'insertion de paquets MIP à la place de paquets nuls du flux délivré par le module d'insertion de paquets MIP à une périodicité de l'ordre de 40ms.

Le flux ainsi modifié est transféré au dispositif de diffusion par satellite d'au moins un flux DVB 40.

La sortie du module de multiplexage et de transmission satellite 52 est reliée à une antenne 55 pour diffusion du flux de données.

Le flux de données transmis par l'antenne 45 et le flux de données transmis par l'antenne 55 sont reçus par un dispositif de synchronisation et de filtrage 60 via deux liaisons satellites et par l'intermédiaire d'une ou plusieurs antennes 61.

Le dispositif de synchronisation et de filtrage 60 traite au moins les paquets contenant un champ PCR insérés par le module d'étiquetage temporel 55 de manière à fournir une synchronisation qui permet à un modulateur OFDM 62 d'effectuer une diffusion terrestre synchrone au sein d'une plaque mono fréquence.

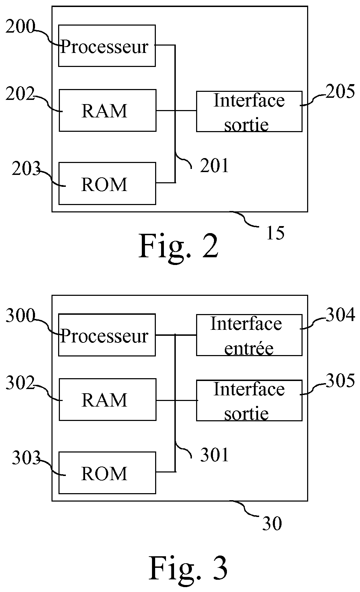

La **Fig. 2** représente un module de génération d'un étiquetage temporel pour une diffusion terrestre synchrone au sein d'une plaque mono fréquence.

Le dispositif de génération d'un étiquetage temporel 15 ou 55 comporte un bus de communication 201 auquel sont reliés un processeur 200, une mémoire non volatile 203, une mémoire vive 202, une interface de communication ou d'entrée 204 avec le multiplexeur 11 et une interface de communication ou de sortie 205 avec le modulateur 15.

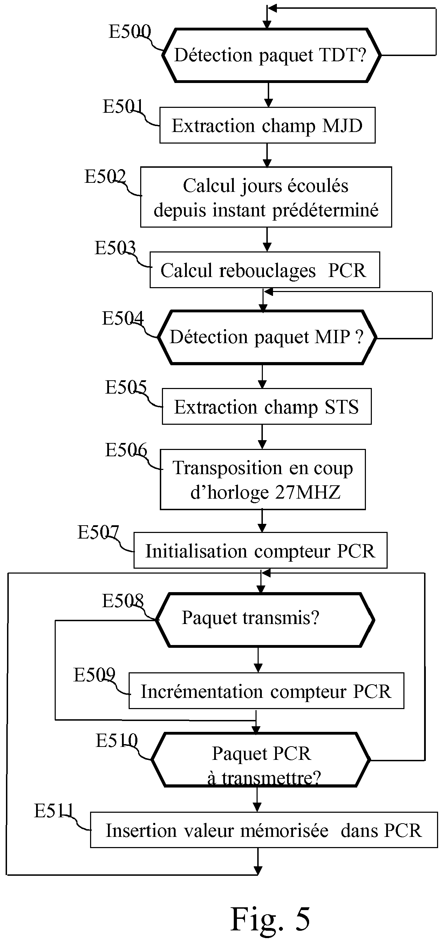

La mémoire non volatile 203 mémorise les modules logiciels ainsi que les données permettant de mettre en oeuvre l'algorithme qui sera décrit par la suite en référence à la Fig. 5.

De manière plus générale, les programmes sont mémorisés dans un moyen de stockage. Ce moyen de stockage est lisible par le microprocesseur 200.

Lors de la mise sous tension du dispositif de génération d'un étiquetage temporel 15 ou 55, les modules logiciels sont transférés dans la mémoire vive 202 qui contient alors le code exécutable ainsi que les données nécessaires à la mise en oeuvre de l'algorithme.

Par l'intermédiaire de l'interface 205, le dispositif de génération d'un étiquetage temporel 15 transfère le flux DTT ainsi modifié au dispositif de formation d'au moins un flux DVB 20 pour une diffusion par satellite.

Par l'intermédiaire de l'interface 205, le dispositif de génération d'un étiquetage temporel 55 transfère le flux ainsi modifié aux modules de multiplexage et de transmission satellite 42 et 52.

Tout ou partie des étapes de l'algorithme décrit par la suite en regard de la Fig. 5 peut être implémenté par logiciel en exécutant les étapes par un dispositif programmable tel qu'un microprocesseur, un DSP (*Digital Signal Processor*), ou un microcontrôleur ou implémenté dans un composant tel qu'un FPGA (*Field-Programmable Gate Array*) ou un ASIC (*Application-Specific Integrated Circuit*).

En d'autres mots, le dispositif de génération d'un étiquetage temporel 15 ou 55 comporte de la circuiterie qui

EP 3 085 098 B1

permet au dispositif de génération d'un étiquetage temporel 15 ou 55 d'exécuter les étapes de l'algorithme de la Fig. 5.

La **Fig. 3** représente un dispositif de synchronisation et de filtrage d'au moins un flux reçu par une liaison satellitaire pour une diffusion terrestre synchrone au sein d'une plaque mono fréquence.

Le dispositif de synchronisation et de filtrage 30 ou 60 comporte un bus de communication 301 auquel sont reliés un processeur 300, une mémoire non volatile 303, une mémoire vive 302, une interface de réception de signaux et une interface de sortie 305 avec le modulateur OFDM 32.

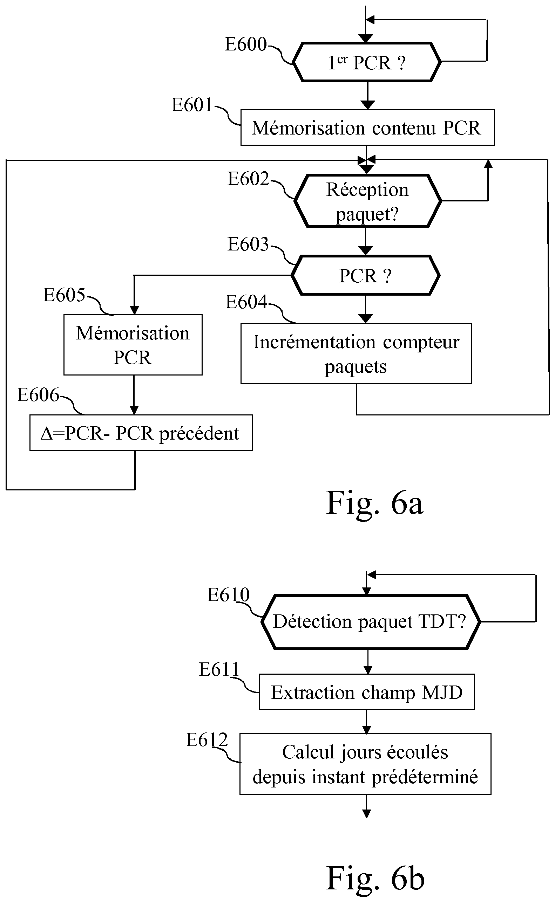

La mémoire non volatile 303 mémorise les modules logiciels mettant en oeuvre l'invention, ainsi que les données permettant de mettre en oeuvre l'algorithme qui sera décrit par la suite en référence aux Figs. 6a à 6f.

De manière plus générale, les programmes selon la présente invention sont mémorisés dans un moyen de stockage. Ce moyen de stockage est lisible par le microprocesseur 300.

Lors de la mise sous tension du dispositif de synchronisation et de filtrage 30 ou 60, les modules logiciels selon la présente invention sont transférés dans la mémoire vive 302 qui contient alors le code exécutable de l'invention ainsi que les données nécessaires à la mise en oeuvre de l'invention.

Par l'intermédiaire de l'interface 304, le dispositif de synchronisation 30 ou 60 reçoit au moins un flux satellite par l'intermédiaire de l'antenne 31 ou 61.

Par l'intermédiaire de l'interface 305, le dispositif de synchronisation et de filtrage 30 ou 60 transfère au moins un flux DVB au modulateur OFDM 32 qui effectue une diffusion terrestre synchrone du au moins un flux DVB au sein d'une plaque mono fréquence.

Tout ou partie des étapes des algorithmes décrits par la suite en regard des Figs. 6a à 6f peut être implémenté par logiciel en exécutant les étapes par un dispositif programmable tel qu'un microprocesseur, un DSP (*Digital Signal Processor*), ou un microcontrôleur ou implémenté dans un composant tel qu'un FPGA (*Field-Programmable Gate Array*) ou un ASIC (*Application-Specific Integrated Circuit*).

En d'autres mots, le dispositif de synchronisation et de filtrage 30 ou 60 comporte de la circuiterie qui permet au le dispositif de synchronisation et de filtrage 30 d'exécuter les étapes des algorithmes des Figs. 6a à 6e.

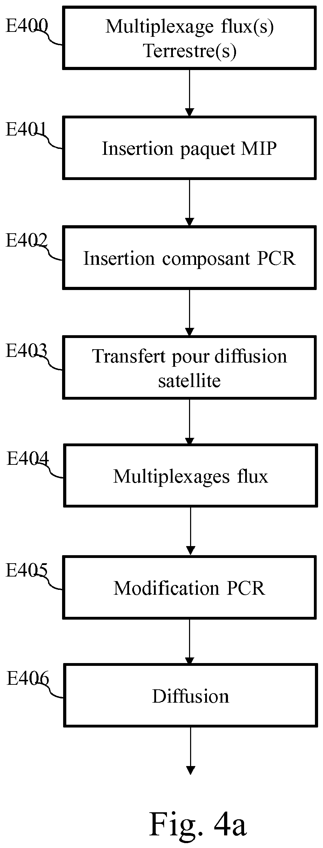

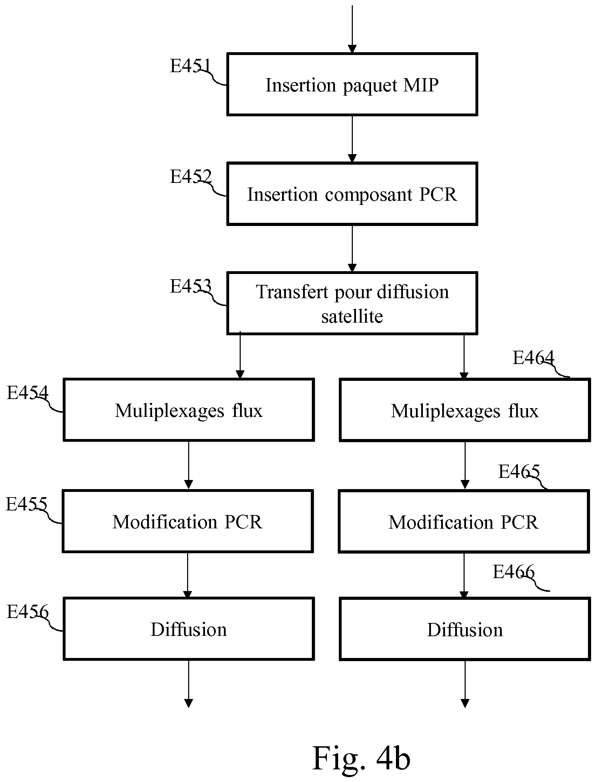

La **Fig. 4** représente un exemple d'algorithme de transfert d'au moins un flux d'un flux DVB par l'intermédiaire d'une liaison satellite pour une diffusion terrestre synchrone au sein d'une plaque mono fréquence selon le premier exemple d'architecture.

A l'étape E400, le dispositif de formation d'au moins un flux DVB 10 multiplexe les différents flux audiovisuels produits par les encodeurs 11a et 11c.

A l'étape E401, le dispositif de formation d'au moins un flux DVB 10 d'insère des paquets MIP d'initialisation de méga trame.

Chaque paquet MIP indique le début d'une méga trame et comporte une information représentative d'une horloge de référence commune précise, typiquement une horloge GPS. Le flux ainsi formé est un flux DTT.

A l'étape E402, le dispositif de formation d'au moins un flux DVB 10 effectue un étiquetage temporel.

Le dispositif de formation d'au moins un flux DVB 10 insère dans le flux DTT un étiquetage temporel qui permet à des dispositifs de diffusion terrestre d'effectuer une diffusion terrestre synchrone au sein d'une plaque mono fréquence.

L'étiquetage temporel, sous la forme de paquets contenant un champ PCR, est préférentiellement introduit dans le flux DTT à la place de paquets nuls du flux DTT à une périodicité de l'ordre de 40ms qui peut être définie par l'utilisateur du dispositif de formation d'au moins un flux DVB 10.

Les paquets contenant un champ PCR utilisés comme étiquetage temporel permettant à des dispositifs de diffusion terrestre d'effectuer une diffusion terrestre synchrone au sein d'une plaque mono fréquence ont le même identifiant, différents des autres identifiants compris dans le flux DTT.

Les paquets contenant un champ PCR utilisés comme étiquetage temporel permettant à des dispositifs de diffusion terrestre d'effectuer une diffusion terrestre synchrone au sein d'une plaque mono fréquence ont le même identifiant qui identifie un service dit de référence.

L'étiquetage temporel sera décrit plus en détail en référence à la Fig. 5.

A l'étape E403, le dispositif de formation d'au moins un flux DVB 10 transfère le flux DTT au dispositif de diffusion par satellite d'au moins un flux DVB 20.

A l'étape E404, le dispositif de diffusion par satellite d'au moins un flux DVB 20 multiplexe les différents flux audiovisuels produits par les encodeurs 21a et 21c ainsi que le flux DTT reçu du dispositif de formation d'au moins un flux DVB 10.

A l'étape E405, le dispositif de diffusion par satellite d'au moins un flux DVB 20 modifie les paquets contenant un champ PCR d'au moins un flux conformément au multiplexage effectué à l'étape E44.

A l'étape E406, le dispositif de diffusion par satellite d'au moins un flux DVB 20 transfère le au moins un flux pour une diffusion satellite de celui-ci.

La **Fig. 4b** représente un exemple d'algorithme de transfert de deux flux DVB par l'intermédiaire d'une liaison satellite pour une diffusion terrestre synchrone au sein d'une plaque mono fréquence selon le second exemple d'architecture.

5

A l'étape E451, le dispositif de diffusion par satellite d'un flux DVB 50 insère des paquets MIP d'initialisation de méga trame dans un flux composé par exemple de paquets vides.

Chaque paquet MIP indique le début d'une méga trame et comporte une information représentative d'une horloge de référence commune précise, typiquement une horloge GPS.

A l'étape E452, le dispositif de diffusion par satellite d'un flux DVB 50 insère un étiquetage temporel.

Le dispositif de diffusion par satellite d'un flux DVB 50 insère dans le flux dans lequel les paquets MIP ont été insérés un étiquetage temporel qui permet à des dispositifs de diffusion terrestre d'effectuer une diffusion terrestre synchrone au sein d'une plaque mono fréquence.

L'étiquetage temporel, sous la forme de paquets contenant un champ PCR, est préférentiellement introduit dans le flux à la place de paquets nuls à une périodicité de l'ordre de 40ms qui peut être définie par l'utilisateur du dispositif de diffusion par satellite d'un flux DVB 50.

Les paquets contenant un champ PCR utilisés comme étiquetage temporel permettant à des dispositifs de diffusion terrestre d'effectuer une diffusion terrestre synchrone au sein d'une plaque mono fréquence ont le même identifiant, différent des autres identifiants des autres identifiants compris dans le flux.

Les paquets contenant un champ PCR utilisés comme étiquetage temporel permettant à des dispositifs de diffusion terrestre d'effectuer une diffusion terrestre synchrone au sein d'une plaque mono fréquence ont le même identifiant qui identifie un service dit de référence.

L'étiquetage temporel sera décrit plus en détail en référence à la Fig. 5.

A l'étape E453, le dispositif de diffusion par satellite d'un flux DVB 50 transfère le flux formé à l'étape E453 au dispositif de diffusion par satellite d'au moins un flux DVB 40 et au module de multiplexage et de transmission satellite 52.

A l'étape E454, le dispositif de diffusion par satellite d'un flux DVB 50 multiplexe les différents flux audiovisuels produits par les encodeurs 51a et 51c ainsi que le flux formé à l'étape E452.

A l'étape E455, le dispositif de diffusion par satellite d'un flux DVB 50 modifie les paquets contenant un champ PCR d'un flux conformément au multiplexage effectué à l'étape E454.

A l'étape E456, le dispositif de diffusion par satellite d'un flux DVB 50 transfère le flux pour une diffusion satellite de celui-ci.

A l'étape E464, le dispositif de diffusion par satellite d'un flux DVB 40 multiplexe les différents flux audiovisuels produits par les encodeurs 41a et 41c ainsi que le flux formé à l'étape E452.

A l'étape E465, le dispositif de diffusion par satellite d'un flux DVB 40 modifie les paquets contenant un champ PCR d'au moins un flux conformément au multiplexage effectué à l'étape E464.

A l'étape E466, le dispositif de diffusion par satellite d'un flux DVB 40 transfère le flux pour une diffusion satellite de celui-ci.

La **Fig. 5** représente un exemple d'algorithme d'étiquetage temporel pour une diffusion terrestre synchrone au sein d'une plaque mono fréquence.

Plus précisément, le présent algorithme est exécuté par le processeur 200 du module d'étiquetage temporel 15 ou 55.

A l'étape E500, le processeur 200 vérifie si un paquet du flux DTT reçu est un paquet TDT, acronyme de « Time and Date Table ». Les paquets TDT sont des paquets tels que décrits dans la norme EN 300 468 V1.8.1.

Si un paquet TDT est reçu, le processeur 200 passe à l'étape E501.

A l'étape E501, le processeur 200 extrait le champ MJD du paquet TDT détecté.

MJD est l'acronyme de « Modified Julian Date » et contient le nombre de jours écoulés depuis le 1$^{er}$ janvier 1900.

A l'étape suivante E502, le processeur 200 calcule le nombre de jours $Nb_{jour}$ écoulés depuis une date prédéterminée. La date prédéterminée est par exemple égale au 1$^{er}$ janvier 2013.

MJD(1$^{er}$ janvier 2013)= 56293 est la valeur du champ MJD au 1$^{er}$ janvier 2013.

$Nb_{jour}$= MJD-MJD(1$^{er}$ janvier 2013).

A l'étape suivante E503, le processeur 200 détermine le nombre de rebouclages du compteur PCR. Le compteur PCR a une période de rebouclage ou en d'autres termes répétition de $2^{34}*300/27000000$= 190887,4354 secondes. Par exemple, le processeur 200 calcule, dans un premier temps le nombre de secondes Durée écoulées depuis le 1$^{er}$ janvier 2013.

Durée= $Nb_{jour}*86400+3600*h+60*mn+sec$ où h, min et sec sont compris dans le champ MJD.

Le processeur 200 convertit ensuite Durée en nombre de coups d'horloge à 27MHz, $Durée_{27}= Durée * 27000000$

Le processeur 200 calcule ensuite $Nb_{clkPCR}$, le nombre de coups d'horloge à 27MHz équivalent à la période du compteur PCR.

Le compteur PCR comporte 33 bits de poids forts incrémenté à chaque fois que les 9 bits de poids faible du compteur atteignent la valeur 300 :

$$Nb_{clkPCR} = 2^{33} * 300$$

Enfin, le processeur 200 calcule le nombre de rebouclages du compteur PCR : $Nb_{RebouclagePCR}$ = $Durée_{27}/Nb_{clkPCR}$.

A l'étape suivante E504, le processeur 200 vérifie si un paquet du flux DTT reçu est un paquet MIP.

Si un paquet MIP est reçu, le processeur 200 passe à l'étape E506.

A l'étape E505, le processeur 200 extrait le champ STS du paquet MIP détecté.

STS est l'acronyme de « Synchronization Time Stamp » et est décrit dans la norme ETSI 101-191.

Le champ STS est utilisé comme valeur d'initialisation du compteur PCR pour le premier paquet d'étiquetage temporel pour une diffusion sur une plaque monofréquence. Le champ STS champ est exprimé en pas de 100 ns alors que le compteur PCR est exprimé selon une horloge à 27 MHz.

A l'étape E507, le processeur 200 transpose le contenu du champ STS en coups d'horloge à 27MHz.

$$STS_{27}(MIP(n)) = STS(MIP(n)) * 27/10$$

A l'étape suivante E507, le processeur 200 initialise le compteur PCR à la valeur suivante : $PCR_{27}(MIP(0))$ = $(STS_{27} + Nb_{RebouclagePCR}(0) * Offset_{RebouclagePCR})modulo(27000000)$ où $Offset_{RebouclagePCR}$ = 27000000 - ($2^{33} *$ 300)modulo(27000000) = 27000000 - 19377600

A l'étape suivante E508, le processeur 200 vérifie si un paquet du flux DTT est reçu.

Si un paquet du flux DTT est reçu, le processeur 200 passe à l'étape suivante E509.

Si un paquet du flux DTT n'est pas reçu, le processeur 200 passe à l'étape E510.

A l'étape E509, le processeur 200 incrémente le compteur PCR du nombre de coups d'horloge à 27MHz équivalent à la durée théorique du paquet reçu.

A l'étape E510, le processeur 200 vérifie si un paquet contenant un champ PCR doit être transmis. Un paquet contenant un champ PCR est transmis environ toutes les 40 ms et est inséré à la place du premier paquet nul du flux DTT reçu. L'ensemble des paquets contenant un champ PCR insérés selon le procédé décrit ci-dessus ont un identifiant différent des identifiants des autres paquets transmis et forment un service dit de référence.

Si un paquet contenant un champ PCR doit être transmis, le processeur 200 passe à l'étape E511 et insère la valeur du compteur calculée à l'étape E509 dans le champ PCR du paquet à insérer et retourne à l'étape E507.

Si un paquet contenant un champ PCR ne doit pas être transmis, le processeur 200 retourne à l'étape E507.

Comme le compteur PCR et le champ STS s'appuient sur des horloges synchrones, les Champs PCR et STS ne dérivent pas au cours du temps. Ainsi, à chaque paquet MIP(n), nous avons les relations suivantes :

$$STS_{27}(MIP(n)) = STS(MIP(n)) * 27/10$$
$$PCR(MIP(n)) = PCR_{base}(MIP(n)) * 300 + PCR_{ext}(MIP(n))$$
$$PCR_{mod}(MIP(n)) = PCR(MIP(n))modulo(27000000)$$

ainsi

$$STS_{27}(MIP(n)) =$$
$$PCR_{mod}(MIP(n)) +$$
$$Nb_{RebouclagePCR}(0) * Offset_{RebouclagePCR}modulo(27000000)$$

Où $PCR_{base}(MIP(n))$ est un compteur en coups d'horloge à 27Mhz.

Ainsi, il est possible de vérifier à chaque paquet MIP que la génération du paquet MIP est correcte.

Les **Figs. 6a à 6f** représentent un exemple d'algorithme de synchronisation d'au moins un flux reçu par une liaison satellitaire pour une diffusion terrestre synchrone au sein d'une plaque mono fréquence.

Plus précisément, l'algorithme des Figs. 6a à 6e est exécuté par le processeur 300 du dispositif de synchronisation et de filtrage 30. Les étapes E619b à E621b ne sont pas exécutées par le processeur 300 du dispositif de synchronisation et de filtrage 30.

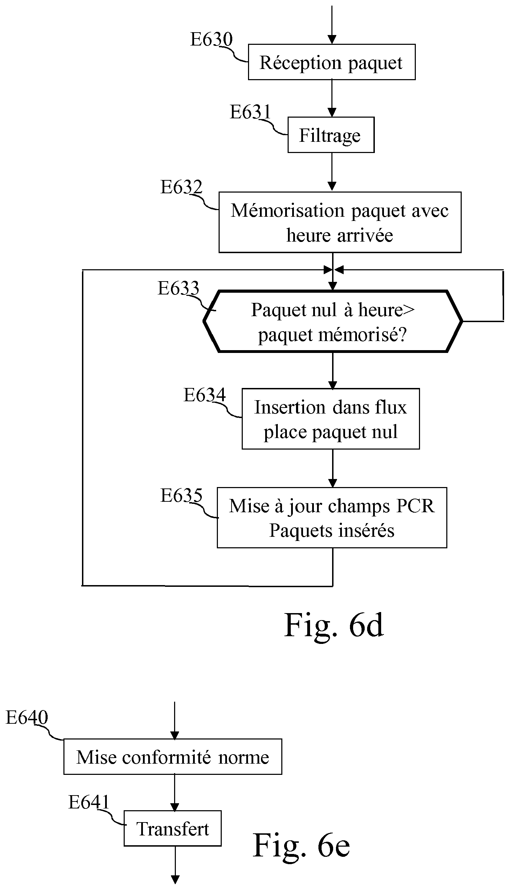

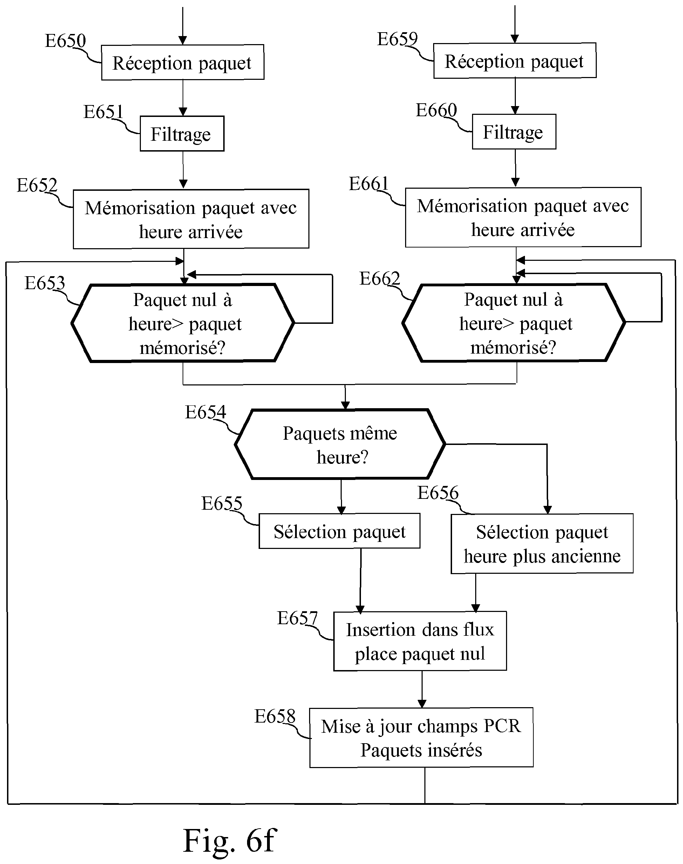

L'algorithme des Figs. 6a à 6c, 6e et 6f est exécuté par le processeur 300 du dispositif de synchronisation et de filtrage 60 pour un des flux reçus.

L'algorithme des Figs. 6a à 6b 6e et 6f ainsi que les étapes E619b à E621b de la

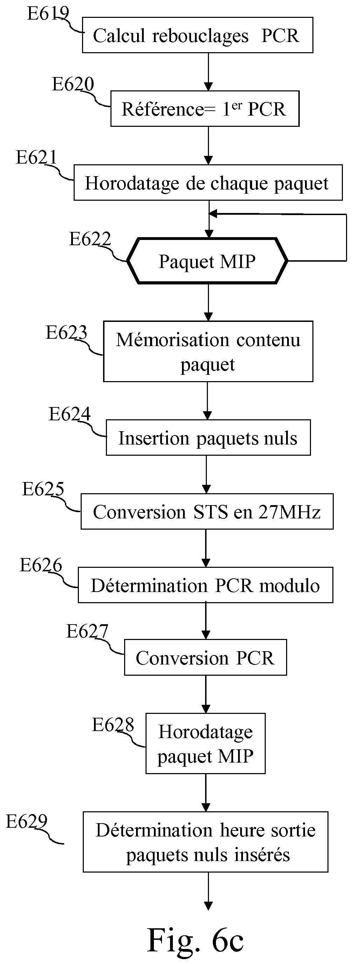

Fig. 6c sont exécutés par le processeur 300 du dispositif de synchronisation et de filtrage 60 pour l'autre flux reçu.

A l'étape E600, le processeur 300 vérifie si un premier paquet appartenant au service de référence et contenant un champ PCR est reçu. Ces paquets seront notés par la suite REF(n,j).

Si un premier paquet contenant un champ PCR est reçu, le processeur 300 passe à l'étape E601.

A l'étape E601, le processeur 300 mémorise le contenu du champ PCR dans la mémoire vive 302.

A l'étape suivante E602, le processeur 300 détecte si un paquet est reçu.

Si un paquet est reçu, le processeur 300 passe à l'étape E603.

A l'étape E603, le processeur 300 vérifie si le paquet reçu est un paquet contenant un champ PCR et appartenant au service de référence. Si le paquet reçu est un paquet contenant un champ PCR et appartenant au service de référence, le processeur 300 passe à l'étape E605. Dans la négative, le processeur 300 passe à l'étape E604.

A l'étape E604, le processeur 300 incrémente un compteur de paquets et retourne à l'étape E602 déjà décrite.

A l'étape E605, le processeur 300 mémorise le contenu du champ PCR dans la mémoire vive 302.

A l'étape E606, le processeur 300 calcule la différence Δ entre les contenus des deux champs PCR précédemment reçus. Cette opération effectuée, le processeur 300 retourne à l'étape E602. La différence Δ est égale à $PCR_{in}(REF(n,j)) - PCR_{in}(REF(n - 1, i))$

L'algorithme de la Fig. 6b est exécuté par le processeur 300 en parallèle avec les étapes de l'algorithme de la Fig. 6a.

A l'étape E610, le processeur 300 vérifie si un paquet du flux DTT reçu est un paquet TDT, acronyme de « Time and Date Table ». Les paquets TDT sont des paquets tels que décrits dans la norme EN 300 468 V1.8.1.

Si un paquet TDT est reçu, le processeur 300 passe à l'étape E611.

A l'étape E611, le processeur 300 extrait le champ MJD du paquet TDT détecté.

MJD est l'acronyme de « Modified Julian Date » et contient le nombre de jours écoulés depuis le 1$^{er}$ janvier 1900.

A l'étape suivante E612, le processeur 300 calcule le nombre de jours Nb$_{jour}$ écoulés depuis une date prédéterminée. La date prédéterminée est par exemple égale au 1$^{er}$ janvier 2013.

MJD(1$^{er}$ janvier 2013)= 56293 est la valeur du champ MJD au 1$^{er}$ janvier 2013. Nb$_{jour}$= MJD-MJD(1$^{er}$ janvier 2013).

L'algorithme de la Fig. 6c est exécuté par le processeur 300 en parallèle avec les étapes de l'algorithme de la Fig. 6a.

A l'étape E619, le processeur 200 calcule le nombre de rebouclages du compteur PCR. Le compteur PCR a une période de rebouclage ou en d'autres termes répétition de 2$^{34}$*300/27000000= 190887,4354 secondes. Par exemple, le processeur 200 calcule, dans un premier temps le nombre de secondes Durée écoulées depuis le 1$^{er}$ janvier 2013.

Durée= Nb$_{jour}$*86400+3600*h+60*mn+sec où h, min et sec sont compris dans le champ MJD.

Le processeur 200 convertie ensuite Durée en nombre de coups d'horloge à 27MHz, $Durée_{27} = Durée * 27000000$

Le processeur 200 calcule ensuite $Nb_{clkPCR}$, le nombre de coups d'horloge à 27MHz équivalents à la période du compteur PCR.

Le compteur PCR comporte 33 bits de poids forts incrémenté à chaque fois que les 9 bits de poids faible du compteur atteignent la valeur 300 :

$$Nb_{clkPCR} = 2^{33} * 300$$

Enfin, le processeur 200 calcule le nombre de rebouclages du compteur PCR : $Nb_{RebouclagePCR} = Durée_{27}/Nb_{clkPCR}$.

A l'étape E620, le processeur 300 prend en tant que référence le contenu du premier paquet contenant un champ PCR mémorisé à l'étape E601.

A l'étape suivante E621, le processeur 300 horodate chaque paquet reçu à partir de la référence prise à l'étape E620 ainsi que la différence calculée à l'étape E605 de la Fig. 6a.

Le processeur 300 horodate chaque paquet du flux reçu et affecte à chaque paquet p une heure d'entrée $T_{in}(p)$.

Pour chaque paquet p, l'heure d'entrée est calculée de la manière suivante :

$$T_{in}(p) = PCR_{in}\big(REF(n-1,i)\big) + \left(\frac{(PCR_{in}(REF(n,j)) - PCR_{in}(REF(n-1,i)))}{N}\right) * N_i$$

$N$ est le nombre paquets dans le flux reçu entre les paquets REF(n,j) et REF(n-1,i), c'est-à dire les paquets insérés à l'étape E42 de la Fig. 4. Le paquet REF(n-1,i) est le premier paquet inséré à l'étape E42 de la Fig. 4 précédent le paquet p et le paquet REF(n,j) est le premier paquet inséré à l'étape E42 de la Fig. 4 suivant le paquet p.

$N_i$ est le nombre paquets dans le flux reçu entre les paquets REF(n-1,i) et le paquet p.

Le processeur 300 exécute aux étapes E619b à E621b, parallèlement aux étapes E619 à E621, un horodatage des paquets de l'autre flux reçu de manière similaire à celle décrite pour les étapes 619 à E621. Lorsque les étapes E621 et E621b sont exécutées, le processeur 300 passe à l'étape E622.

Les étapes suivantes E622 à E629 correspondent à la création du flux de référence.

A l'étape suivante E622, le processeur 300 vérifie si un paquet MIP est reçu. Si un paquet MIP est reçu, le processeur 300 passe à l'étape E623.

A l'étape E623, le processeur 300 mémorise le contenu du paquet MIP reçu. Le paquet MIP contient un champ STS ainsi que des informations qui définissent les paramètres de modulation utilisés par le modulateur OFDM 32. Le processeur 300 extrait le champ STS du paquet MIP détecté.

Le champ STS est utilisé comme valeur d'initialisation du compteur PCR pour le premier paquet d'étiquetage temporel pour une diffusion sur une plaque monofréquence. Il est à remarquer ici que le contenu du champ STS n'est pas modifié par le multiplexeur 22 ou 42 et 52.

A l'étape suivante E624, le processeur 300 insère un nombre de paquets nuls entre chaque paquet MIP reçu. Le nombre de paquets insérés dépend des informations qui définissent les paramètres de modulation utilisés par le modulateur OFDM 32 et qui sont comprises dans le ou les paquets MIP reçus.

Le processeur 300 forme ainsi un flux comportant des paquets MIP et des paquets nuls. Ce flux est par exemple appelé flux de référence.

A l'étape E625, le processeur 300 transpose le contenu du champ STS en coups d'horloge à 27MHz.

$$STS_{27}(MIP(n)) = STS(MIP(n)) * 27/10$$

Le champ STS champ est exprimé en pas de 100 ns alors que le compteur PCR est exprimé selon une horloge à 27 MHz.

A l'étape suivante E626, le processeur 300 détermine le modulo du compteur PCR exprimé à partir de l'horloge à 27MHz à partir de la formule suivante :

$$STS_{27}(MIP(n)) = STS(MIP(n)) * 27/10$$

$$PCR(MIP(n)) = PCR_{base}(MIP(n)) * 300 + PCR_{ext}(MIP(n)),$$

*compteur en coup d'horloge à 27Mhz*

$$PCR_{mod}(MIP(n)) = PCR(MIP(n)) \, modulo \, (27000000)$$

Le processeur 300 exécute cette étape afin de retrouver la valeur du champ PCR avant le multiplexage par le multiplexeur 22.

A l'étape suivante E627, le processeur 300 convertit le modulo du compteur PCR exprimé à partir de l'horloge à 27MHz dans le format classique d'un compteur PCR, soit un champ de 9 bits qui compte jusqu'à 300 et un champ de 33 bits qui compte les rebouclages du champ de 9 bits.

Comme La valeur $T_{in}(MIP(n))$ est très proche de $PCR(MIP(n))$, le processeur prend la partie PCR$_{sec}$ correspondant à la partie entière en nombre de secondes du champ PCR :
Le processeur 300 calcule :

$$PCR_{subsec}(MIP(n)) = (T_{in}(MIP(n)) \, modulo \, 27000000)$$

$$PCR_{sec}(MIP(n)) = T_{in}(MIP(n)) - PCR_{subsec}(MIP(n))$$

PCR$_{subsec}$ correspond à la partie non entière du champ PCR exprimé en secondes.

PCRsubsec et PCRsec correspondent à valeur du PCR avant mutiplexage par le multiplexeur 22.

Afin de prendre en compte les changements de seconde lors du passage dans le multiplexeur 22, le traitement suivant est réalisé :

$$SiPCR_{subsec}(MIP(n)) > 0{,}95 setPCR_{mod}(MIP(n)) < 0{,}05s$$
$$PCR(MIP(n)) = PCR_{sec}(MIP(n)) + 1 + PCR_{mod}(MIP(n))$$

$$SiPCR_{mod}(MIP(n)) > 0{,}95 setPCR_{subsec}(MIP(n)) < 0{,}05s$$
$$PCR(MIP(n)) = PCR_{sec}(MIP(n)) - 1 + PCR_{mod}(MIP(n))$$

*sinon*

$$PCR(MIP(n)) = PCR_{sec}(MIP(n)) + PCR_{mod}(MIP(n))$$

A l'étape suivante E628, le processeur 300 horodate chaque paquet MIP selon la formule suivante :

$$T_{out}(MIP(n)) = PCR(MIP(n))$$

A l'étape suivante E629, le processeur 300 détermine une heure de sortie pour chaque paquet nul inséré: L'heure de sortie $T_{out}(i)$ du paquet i est définie par

$$T_{out}(i) = T_{out}(MIP(n)) + D_{out}(i, MIP(n))$$

$D_{out}(i, MIP(n))$ est l'écart de temps à la sortie du dispositif 30 entre le paquet i et le paquet MIP(n) précédent le paquet i.

Le débit du flux de sortie du dispositif de synchronisation et de filtrage 30 étant connu et fixe et dépendant des paramètres de modulation compris dans les paquets MIP, le temps de transmission *Durée$_{paquet}$d'un* paquet TS est donné par :

$$D_{out}(i, MIP(n)) = a * Durée_{paquet}$$

a est le nombre de paquets entre le paquet MIP et le paquet i.

Ainsi, nous avons la formule suivante :

$$T_{out}(i) = PCR(MIP(n)) + a * Durée_{paquet}.$$

L'algorithme de la Fig. 6d est exécuté par le processeur 300 en parallèle avec les étapes de l'algorithme de la Fig. 6a.

A l'étape E630, le processeur 300 reçoit un paquet par l'intermédiaire de l'antenne 31.

A l'étape suivante E631, le processeur 300 effectue un filtrage sur le paquet reçu. Pour cela, le processeur 300 détermine si le paquet reçu est un paquet devant être transmis par le modulateur 32 via l'antenne 33.

Si le paquet reçu est un paquet devant être transmis par le modulateur 32 via l'antenne 33, le processeur 300 mémorise à l'étape E632 le paquet ainsi que son heure de réception calculée à l'étape E621 dans la mémoire RAM 302.

A l'étape suivante E633, le processeur 300 vérifie si un paquet nul inséré à l'étape E624 de l'algorithme de la Fig. 6c a une heure supérieure ou égale à celle du paquet mémorisé à l'étape E632.

Si un paquet nul inséré à l'étape E624 a une heure supérieure ou égale à celle du paquet mémorisé à l'étape E632, le processeur 300 passe à l'étape E634.

A l'étape E634, le processeur 300 insère le paquet mémorisé à l'étape E632 à la place du paquet nul dont l'heure est supérieure ou égale à celle du paquet mémorisé à l'étape E632.

A l'étape E635, le processeur 300 met à jour les champs PCR contenus dans les paquets.

Pour la mise à jour du PCR contenu dans le paquet i, nous avons la formule suivante

$$PCR_{out}(i) = PCR_{\text{in}}(i) + T_{out}(i) - T_{\text{in}}(i)$$

$$PCR_{out}(i) = PCR_{\text{in}}(i) + T_{out}(MIP(n)) + D_{out}(i, MIP(n)) - T_{\text{in}}(i)$$

$T_{in}(i)$ est l'heure d'entrée du paquet i et $T_{out}(i)$ est l'heure de sortie du paquet I Sachant que :

$$T_{out}(MIP(n)) = PCR(MIP(n))$$

et

$$T_{out}(i) = PCR(MIP(n)) + a * Durée_{paquet}$$

$$PCR_{out}(i) = PCR_{\text{in}}(i) + PCR(MIP(n)) + a * Durée_{paquet} - T_{\text{in}}(i)$$

Cette étape effectuée, le processeur 300 retourne à l'étape E633.

L'algorithme de la Fig. 6e est exécuté par le processeur 300 en parallèle avec les étapes de l'algorithme de la Fig. 6a.

A l'étape E640, le processeur 300 effectue une mise en conformité du flux généré par l'algorithme de la Fig. 6d à une norme de transmission par exemple la norme ETSI 13818.

Par exemple, le processeur 300 insère à la place de paquets nuls des tables PSI qui décrivent le contenu du flux transmis.

Par exemple, au démarrage du dispositif de synchronisation et de filtrage 30 ou lors d'une modification des tables, les tables PAT (Program Association Table) PMT (Program Map Table) SDT (Service Description Table) et CAT (Conditionnai access table) sont extraites du flux DTH, les tables sont recalculées et stockées en mémoire. Le filtrage des tables PID (Program Indication Table) est fonction du contenu des PMT des services conservés.

Les compteurs PCR sont en partie codés sur 33 bits avec une horloge de 90Khz. Ainsi, le seizième bit 16 conserve la valeur 0 pendant 728,1 ms et est à 1 pendant 728,1 ms. Par exemple, ce bit peut être utilisé lorsqu'il passe à 0 comme instant d'initialisation pour l'insertion des tables de signalisation.

Par exemple, les tables PAD, SDT sont insérées à chaque instant d'initialisation. A titre d'exemple, les périodes d'insertion des tables peuvent être les suivantes :PAT, PMT, CAT :2,912s /16 : 182 ms : ainsi dans l'intervalle de temps défini par le bit 17 du compteur PCR le processeur 300 insère périodiquement 16 fois ces tables dans chaque période de 2,912s.

SDT : 23,3 s/ 16 = 1,456 s ainsi dans l'intervalle de temps défini par le bit 19 du compteur PCR nous insérons périodiquement 16 fois la table SDT dans chaque période de 2,912s.

NIT (Network Information Table) : 93,2 s/ 16 = 5,825 s. Elle peut être chargée dans l'équipement lors de la configuration.

Les tables TDT (Time Date Table) et TOT (Time Offset Table) sont directement copiées du flux DTH.

L'algorithme de la Fig. 6f est exécuté par le processeur 300 du dispositif de synchronisation et de filtrage 60 en parallèle avec les étapes de l'algorithme de la Fig. 6a.

Les étapes E650 à E653 et E659 à E66 sont exécutées en parallèle pour chaque flux reçu.

A l'étape E650, le processeur 300 reçoit un paquet d'un premier flux par l'intermédiaire de l'antenne 61.

A l'étape suivante E651, le processeur 300 effectue un filtrage sur le paquet reçu. Pour cela, le processeur 300 détermine si le paquet reçu est un paquet devant être transmis par le modulateur 62 via l'antenne 63.

Si le paquet reçu est un paquet devant être transmis par le modulateur 62 via l'antenne 63, le processeur 300 mémorise à l'étape E652 le paquet ainsi que son heure de réception calculée à l'étape E621 dans la mémoire RAM 302.

A l'étape suivante E653, le processeur 300 vérifie si un paquet nul inséré à l'étape E624 de l'algorithme de la Fig. 6c a une heure supérieure ou égale à celle du paquet mémorisé à l'étape E652.

Si un paquet nul inséré à l'étape E624 a une heure supérieure ou égale à celle du paquet mémorisé à l'étape E652, le processeur 300 passe à l'étape E654. Dans la négative, le processeur 300 retourne à l'étape E653 pour traiter un nouveau paquet reçu et traité aux étapes E651 et E652.

A l'étape E659, le processeur 300 reçoit un paquet d'un premier flux par l'intermédiaire de l'antenne 61.

A l'étape suivante E660, le processeur 300 effectue un filtrage sur le paquet reçu. Pour cela, le processeur 300 détermine si le paquet reçu est un paquet devant être transmis par le modulateur 62 via l'antenne 63.

Si le paquet reçu est un paquet devant être transmis par le modulateur 62 via l'antenne 63, le processeur 300 mémorise à l'étape E661 le paquet ainsi que son heure de réception calculée à l'étape E621b dans la mémoire RAM 302.

A l'étape suivante E662, le processeur 300 vérifie si un paquet nul inséré à l'étape E624 de l'algorithme de la Fig. 6c a une heure supérieure ou égale à celle du paquet mémorisé à l'étape E661.

Si un paquet nul inséré à l'étape E624 a une heure supérieure ou égale à celle du paquet mémorisé à l'étape E661, le processeur 300 passe à l'étape E654. Dans la négative, le processeur 300 retourne à l'étape E662 pour traiter un nouveau paquet reçu et traité aux étapes E660 et E661.

A l'étape E654, le processeur 300 compare l'heure du paquet mémorisé à l'étape E652 avec l'heure du paquet mémorisé à l'étape E661.

Si l'heure du paquet mémorisé à l'étape E652 et l'heure du paquet mémorisé à l'étape E661 sont identiques, le processeur 300 passe à l'étape E655. Si l'heure du paquet mémorisé à l'étape E652 et l'heure du paquet mémorisé à l'étape E661 sont différentes, le processeur 300 passe à l'étape E656.

A l'étape E655, le processeur 300 sélectionne un des paquets mémorisés à l'étape E652 ou E661 et passe à l'étape E657. La sélection est par exemple définie selon une contrainte donnée par l'utilisateur du système.

A l'étape E656, le processeur 300 sélectionne le paquet mémorisé à l'étape E652 ou E661 qui a l'heure la plus ancienne et passe à l'étape E657.

A l'étape E657, le processeur 300 insère le paquet sélectionné à l'étape E655 ou E656 à la place du paquet nul dont l'heure est supérieure ou égale à celle du paquet sélectionné à l'étape E655 ou E656.

A l'étape E658, le processeur 300 met à jour les champs PCR contenus dans les paquets.

Pour la mise à jour du PCR contenu dans le paquet i, nous avons la formule suivante

$$PCR_{out}(i) = PCR_{in}(i) + T_{out}(i) - T_{in}(i)$$

$$PCR_{out}(i) = PCR_{in}(i) + T_{out}(MIP(n)) + D_{out}(i, MIP(n)) - T_{in}(i)$$

$T_{in}(i)$ est l'heure d'entrée du paquet i et $T_{out}(i)$ est l'heure de sortie du paquet I Sachant que :

$$T_{out}(MIP(n)) = PCR(MIP(n))$$

et

$$T_{out}(i) = PCR(MIP(n)) + a * Durée_{paquet}$$

$$PCR_{out}(i) = PCR_{in}(i) + PCR(MIP(n)) + a * Durée_{paquet} - T_{in}(i)$$

Cette étape effectuée, le processeur 300 retourne à l'étape E653 et à l'étape E662.

## Revendications

**1.** Procédé de filtrage et de synchronisation d'au moins un flux audiovisuel pour une diffusion terrestre synchrone au sein d'au moins une plaque mono fréquence, le flux audiovisuel étant reçu via au moins une liaison dans laquelle le au moins un flux audiovisuel est multiplexé avec au moins un autre flux audiovisuel diffusé par la au moins une liaison, **caractérisé en ce que** le procédé comporte les étapes de :

- filtrage (E651), parmi les paquets reçus via la au moins une liaison, des paquets audiovisuels destinés à la diffusion terrestre synchrone au sein d'au moins une plaque mono fréquence,

- détection (E600, E603), parmi les paquets reçus via la au moins une liaison, de paquets comportant un compteur, calcul (E606) de la durée entre deux paquets comportant un compteur et comptage (E604) des paquets entre les deux paquets comportant un compteur,
- horodatage (E621) de chaque paquet reçu en fonction de la durée calculée et du nombre de paquets décomptés,
- détection (E623) de paquets comportant au moins une information représentative d'une horloge de référence commune,
- insertion (E624) de paquets nuls entre chaque paquet comportant au moins une information représentative d'une horloge de référence commune,
- horodatage (E629) de chaque paquet nul,
- remplacement (E634) d'un paquet nul horodaté par un paquet filtré si le paquet nul a un horodatage supérieur ou égal à celui du paquet reçu filtré,
- mise à jour (E658) d'au moins un paquet comportant un compteur dans le flux audiovisuel pour former un flux audiovisuel pour la diffusion terrestre synchrone au sein d'au moins une plaque mono fréquence.

2. Procédé selon la revendication 1, **caractérisé en ce que** le procédé comporte en outre une étape (E640) de mise en conformité du flux audiovisuel pour la diffusion terrestre synchrone au sein d'au moins une plaque mono fréquence à une norme de transmission.

3. Procédé selon la revendication 2, **caractérisé en ce que** plusieurs tables sont insérées (E640) dans le flux audiovisuel pour la diffusion terrestre synchrone au sein d'au moins une plaque mono fréquence à une périodicité qui dépend de la périodicité d'au moins un bit du compteur.

4. Procédé selon l'une quelconque des revendications 1 à 3, **caractérisé en ce que** au moins une liaison est une liaison satellitaire.

5. Procédé selon l'une quelconque des revendications 1 à 4, **caractérisé en ce que** l'horodatage (E629) de chaque paquet nul est fonction d'un compteur du paquet le précédant qui comporte au moins une information représentative d'une horloge de référence commune et est fonction d'un nombre de paquets entre ce paquet le précédant et ledit paquet nul.

6. Procédé selon l'une quelconque des revendications 1 à 5, **caractérisé en ce que** l'horodatage (E621) de chaque paquet reçu est également fonction du compteur du premier paquet à partir duquel la durée est calculée.

7. Procédé selon l'une quelconque des revendications 1 à 6, **caractérisé en ce que** le procédé comporte en outre les étapes suivantes :

- filtrage (E660), parmi des paquets d'un second flux audiovisuel reçus via la au moins une liaison, de paquets audiovisuels destinés à la diffusion terrestre synchrone au sein d'au moins une plaque mono fréquence,
- détection (E600, E603), parmi les paquets du second flux audiovisuel reçus via la au moins une liaison, de paquets comportant un compteur, calcul (E606) de la durée, dite second durée, entre deux paquets comportant un compteur et comptage (E604) des paquets du second flux audiovisuel entre les deux paquets comportant un compteur,
- horodatage (E661) de chaque paquet reçu du second flux audiovisuel en fonction de la seconde durée calculée et du nombre de paquets décomptés du second flux audiovisuel,
procédé dans lequel le remplacement d'un paquet nul horodaté comprend la sélection (E656) d'un paquet ayant l'horodatage le plus ancien entre un paquet filtré du flux audiovisuel et un paquet filtré du second flux audiovisuel et l'insertion (E657) du paquet sélectionné à place du paquet nul dont l'horodatage est supérieur ou égal à celui du paquet sélectionné.

8. Procédé selon l'une quelconque des revendications 1 à 7, **caractérisé en ce que** la mise à jour (E658) d'au moins un paquet comportant un compteur comprend le calcul d'un champ PCR selon la formule suivante :
$PCRout(i) = PCRin(i) + Tout(i) - Tin(i)$ où $i$ identifie le paquet, $PCRout(i)$ est le champ PCR mis à jour du paquet, $PCRin(i)$ est un champ PCR du paquet avant mise à jour, $Tout(i)$ est une heure de sortie du paquet et $Tin(i)$ est une heure d'arrivée du paquet.

9. Procédé selon l'une quelconque des revendications 1 à 8, **caractérisé en ce que** le procédé comporte en outre une étape d'insertion de tables PSI, MPEG Program-Specific Information, à la place de paquets nuls.

**10.** Dispositif de filtrage et de synchronisation d'un flux audiovisuel (30) pour une diffusion terrestre synchrone au sein d'au moins une plaque mono fréquence, le flux audiovisuel étant reçu via au moins une liaison dans laquelle le au moins un flux audiovisuel est multiplexé avec au moins un autre flux audiovisuel diffusé par la au moins une liaison, **caractérisé en ce que** le dispositif comporte :

- des moyens de filtrage parmi les paquets reçus via la au moins une liaison des paquets audiovisuels destinés à la diffusion terrestre synchrone au sein d'au moins une plaque mono fréquence,
- des moyens de détection, parmi les paquets reçus via la au moins une liaison, de paquets comportant un compteur, calcul de la durée entre deux paquets comportant un compteur et comptage des paquets entre les deux paquets comportant un compteur,
- des moyens d'horodatage de chaque paquet reçu en fonction de la durée calculée et du nombre de paquets décomptés,
- des moyens de détection de paquets comportant au moins une information représentative d'une horloge de référence commune,
- des moyens d'insertion de paquets nuls entre chaque paquet comportant au moins une information représentative d'une horloge de référence commune,
- des moyens d'horodatage de chaque paquet nul,
- des moyens de remplacement de chaque paquet nul horodaté par un paquet filtré si le paquet nul a un horodatage supérieur ou égal à celui du paquet reçu filtré,
- des moyens de mise à jour d'au moins un paquet comportant un compteur dans le flux audiovisuel pour former un flux audiovisuel pour la diffusion terrestre synchrone au sein d'au moins une plaque mono fréquence.

**Patentansprüche**

**1.** Verfahren zur Filterung und Synchronisation von zumindest einem audiovisuellen Strom für eine synchrone terrestrische Übertragung innerhalb von zumindest einer Monofrequenzplatte, wobei der audiovisuelle Strom über zumindest eine Verbindung empfangen wird, in welcher der zumindest eine audiovisuelle Strom mit zumindest einem weiteren audiovisuellen Strom multiplexiert wird, der über die zumindest eine Verbindung übertragen wird, **dadurch gekennzeichnet, dass** das Verfahren die folgenden Schritte umfasst:

- Ausfiltern (E651) von audiovisuellen Paketen aus über die zumindest eine Verbindung empfangenen Paketen, welche audiovisuellen Pakete für die synchrone terrestrische Übertragung innerhalb von zumindest einer Monofrequenzplatte bestimmt sind,
- Erfassen (E600, E603) von einen Zähler enthaltenden Paketen aus den über die zumindest eine Verbindung empfangenen Paketen, Berechnen (E606) der Dauer zwischen zwei einen Zähler enthaltenden Paketen und Zählen (E604) der Pakete zwischen den beiden einen Zähler enthaltenden Paketen,
- Zeitstempeln (E621) eines jeden empfangenen Pakets in Abhängigkeit von der berechneten Dauer und der Anzahl an gezählten Paketen,
- Erfassen (E623) von Paketen, die zumindest eine für einen gemeinsamen Referenztakt repräsentative Information enthalten,
- Einfügen (E624) von Nullpaketen zwischen jedem Paket, das zumindest eine für einen gemeinsamen Referenztakt repräsentative Information enthält,
- Zeitstempeln (E629) eines jeden Nullpakets,
- Ersetzen (E634) eines zeitgestempelten Nullpakets durch ein gefiltertes Paket, wenn das Nullpaket einen Zeitstempel hat, der größer oder gleich dem des empfangenen, gefilterten Pakets ist,
- Aktualisieren (E658) von zumindest einem einen Zähler enthaltenden Paket in dem audiovisuellen Strom, um einen audiovisuellen Strom zur synchronen terrestrischen Übertragung innerhalb zumindest einer Monofrequenzplatte zu bilden.

**2.** Verfahren nach Anspruch 1, **dadurch gekennzeichnet, dass** das Verfahren ferner einen Schritt (E640) des Angleichens des audiovisuellen Stroms für die synchrone terrestrische Übertragung innerhalb zumindest einer Monofrequenzplatte an eine Übertragungsnorm umfasst.

**3.** Verfahren nach Anspruch 2, **dadurch gekennzeichnet, dass** mehrere Tabellen in den audiovisuellen Strom für eine synchrone terrestrische Übertragung innerhalb zumindest einer Monofrequenzplatte mit einer Periodizität eingefügt werden (E640), die von der Periodizität zumindest eines Bits des Zählers abhängt.

**4.** Verfahren nach einem der Ansprüche 1 bis 3, **dadurch gekennzeichnet, dass** zumindest eine Verbindung eine Satellitenverbindung ist.

**5.** Verfahren nach einem der Ansprüche 1 bis 4, **dadurch gekennzeichnet, dass** das Zeitstempeln (E629) eines jeden Nullpakets Funktion eines Zählers des diesem vorausgehenden Pakets ist, das zumindest eine für einen gemeinsamen Referenztakt repräsentative Information enthält, und Funktion einer Anzahl von Paketen zwischen dem diesem vorausgehenden Paket und dem Nullpaket ist.

**6.** Verfahren nach einem der Ansprüche 1 bis 5, **dadurch gekennzeichnet, dass** das Zeitstempeln (E621) eines jeden empfangenen Pakets auch Funktion von dem Zähler des ersten Pakets ist, ab dem die Dauer berechnet wird.

**7.** Verfahren nach einem der Ansprüche 1 bis 6, **dadurch gekennzeichnet, dass** das Verfahren ferner die nachstehenden Schritte umfasst:

- Ausfiltern (E660) von audiovisuellen Paketen aus über die zumindest eine Verbindung empfangenen Paketen eines zweiten audiovisuellen Stroms, welche audiovisuellen Pakete für die synchrone terrestrische Übertragung innerhalb von zumindest einer Monofrequenzplatte bestimmt sind,
- Erfassen (E600, E603) von einen Zähler enthaltenden Paketen aus den über die zumindest eine Verbindung empfangenen Paketen des zweiten audiovisuellen Stroms, Berechnen (E606) der Dauer, zweite Dauer genannt, zwischen zwei einen Zähler enthaltenden Paketen und Zählen (E604) der Pakete des zweiten audiovisuellen Stroms zwischen den beiden einen Zähler enthaltenden Paketen,
- Zeitstempeln (E661) eines jeden empfangenen Pakets des zweiten audiovisuellen Stroms in Abhängigkeit von der berechneten zweiten Dauer und der Anzahl an gezählten Paketen des zweiten audiovisuellen Stroms, bei welchem Verfahren das Ersetzen eines zeitgestempelten Nullpakets das Auswählen (E656) eines den ältesten Zeitstempel aufweisenden Pakets zwischen einem gefilterten Paket des audiovisuellen Stroms und einem gefilterten Paket des zweiten audiovisuellen Stroms und das Einfügen (E657) des ausgewählten Pakets anstelle des Nullpakets umfasst, dessen Zeitstempel größer oder gleich dem des ausgewählten Pakets ist.

**8.** Verfahren nach einem der Ansprüche 1 bis 7, **dadurch gekennzeichnet, dass** das Aktualisieren (E658) von zumindest einem einen Zähler enthaltenden Paket das Berechnen eines PCR-Feldes nach der nachstehenden Formel umfasst:
PCRout(i) = PCRin(i) + Tout(i) - Tin(i), worin i das Paket identifiziert, PCRout(i) das aktualisierte PCR-Feld des Pakets ist, PCRin(i) ein PCR-Feld des Pakets vor dem Aktualisieren ist, Tout(i) eine Austrittszeit des Pakets ist und Tin(i) eine Ankunftszeit des Pakets ist.

**9.** Verfahren nach einem der Ansprüche 1 bis 8, **dadurch gekennzeichnet, dass** das Verfahren ferner einen Schritt des Einfügens von Tabellen des Typs PSI, MPEG, Program-Specific Information anstelle von Nullpaketen umfasst.

**10.** Vorrichtung zur Filterung und Synchronisation eines audiovisuellen Stroms (30) für eine synchrone terrestrischen Übertragung innerhalb von zumindest einer Monofrequenzplatte, wobei der audiovisuelle Strom über zumindest eine Verbindung empfangen wird, in welcher der zumindest eine audiovisuelle Strom mit zumindest einem weiteren audiovisuellen Strom multiplexiert wird, der über die zumindest eine Verbindung übertragen wird, **dadurch gekennzeichnet, dass** die Vorrichtung enthält:

- Einrichtungen zum Ausfiltern von audiovisuellen Paketen aus über die zumindest eine Verbindung empfangenen Paketen, welche audiovisuellen Pakete für die synchrone terrestrische Übertragung innerhalb von zumindest einer Monofrequenzplatte bestimmt sind,
- Einrichtungen zum Erfassen von einen Zähler enthaltenden Paketen aus den über die zumindest eine Verbindung empfangenen Paketen, zum Berechnen der Dauer zwischen zwei einen Zähler enthaltenden Paketen und zum Zählen der Pakete zwischen den beiden einen Zähler enthaltenden Paketen,
- Einrichtungen zum Zeitstempeln eines jeden empfangenen Pakets in Abhängigkeit von der berechneten Dauer und der Anzahl an gezählten Paketen,
- Einrichtungen zum Erfassen von Paketen, die zumindest eine für einen gemeinsamen Referenztakt repräsentative Information enthalten,
- Einrichtungen zum Einfügen von Nullpaketen zwischen jedem Paket, das zumindest eine für einen gemeinsamen Referenztakt repräsentative eine Information enthält,
- Einrichtungen zum Zeitstempeln eines jeden Nullpakets,
- Einrichtungen zum Ersetzen eines jeden zeitgestempelten Nullpakets durch ein gefiltertes Paket, wenn das Nullpaket einen Zeitstempel hat, der größer oder gleich dem des empfangenen, gefilterten Pakets ist,
- Einrichtungen zum Aktualisieren von zumindest einem einen Zähler enthaltenden Paket in dem audiovisuellen Strom, um einen audiovisuellen Strom zur synchronen terrestrischen Übertragung innerhalb zumindest einer Monofrequenzplatte zu bilden.

**Claims**

1. Method for filtering and synchronising at least one audiovisual stream for synchronous terrestrial broadcasting within at least one single-frequency zone, the audiovisual stream being received via at least one link in which the at least one audiovisual stream is multiplexed with at least one other audiovisual stream broadcast by the at least one link, **characterised in that** the method comprises the steps of:

   - filtering (E651), from the packets received via the at least one link, audiovisual packets intended for synchronous terrestrial broadcasting within at least one single-frequency zone,
   - detecting (E600, E603), from the packets received via the at least one link, packets comprising a counter, calculating (E606) the period between two packets comprising a counter and counting (E604) packets between the two packets having a counter,
   - time-stamping (E621) each packet received based on the calculated period and on the number of packets counted,
   - detecting (E623) packets comprising at least one item of information representing a common reference clock,
   - inserting (E624) null packets between each packet comprising at least one item of information representing a common reference clock,
   - time-stamping (E629) each null packet,
   - replacing (E634) a time-stamped null packet by a filtered packet if the null packet has a timestamp greater than or equal to that of the filtered packet received,
   - updating (E658) at least one packet comprising a counter in the audiovisual stream to form an audiovisual stream for synchronous terrestrial broadcasting within at least one single-frequency zone.

2. Method according to claim 1, **characterised in that** the method further comprises a step (E640) of bringing the audiovisual stream for synchronous terrestrial broadcasting within at least one single-frequency zone into conformity with a transmission standard.

3. Method according to claim 2, **characterised in that** a plurality of tables are inserted (E640) in the audiovisual stream for synchronous terrestrial broadcasting within at least one single-frequency zone at a periodicity which depends on the periodicity of at least one bit of the counter.

4. Method according to any of claims 1 to 3, **characterised in that** at least one link is a satellite link.

5. Method according to any of claims 1 to 4, **characterised in that** the time-stamping (E629) of each null packet is based on a counter of the packet preceding it which comprises at least one item of information representing a common reference clock and is based on a number of packets between this preceding packet and said null packet.

6. Method according to any of claims 1 to 5, **characterised in that** the timestamp (E621) of each received packet is also based on the counter of the first packet from which the period is calculated.

7. Method according to any of claims 1 to 6, **characterised in that** the method further comprises the following steps:

   - filtering (E660), from packets of a second audiovisual stream received via the at least one link, audiovisual packets intended for synchronous terrestrial broadcasting within at least one single-frequency zone,
   - detecting (E600, E603), from the packets of the second audiovisual stream received via the at least one link, packets comprising a counter, calculating (E606) the period, referred to as the second period, between two packets comprising a counter and counting (E604) packets of the second audiovisual stream between the two packets comprising a counter,
   - time-stamping (E661) each packet received from the second audiovisual stream based on the calculated second period and on the number of counted packets of the second audiovisual stream,
   in which method the replacement of a time-stamped null packet comprises selecting (E656) a packet having the oldest timestamp between a filtered packet of the audiovisual stream and a filtered packet of the second audiovisual stream and inserting (E657) the selected packet in place of the null packet whose timestamp is greater than or equal to that of the selected packet.

8. Method according to any of claims 1 to 7, **characterised in that** updating (E658) at least one packet including a counter comprises calculating a PCR field in accordance with the following formula:

$PCR_{out}(i) = PCR_{in}(i) + T_{out}(i) - Tin(i)$ where i identifies the packet, $PCR_{out}(i)$ is the updated PCR field of the packet, $PCR_{in}(i)$ is a PCR field of the packet before updating, $T_{out}(i)$ is a time of output of the packet and $T_{in}(i)$ is a time of arrival of the packet.

9. Method according to any of claims 1 to 8, **characterised in that** the method further comprises a step of inserting MPEG Program-Specific Information (PSI) tables, in place of null packets.

10. Device for filtering and synchronising an audiovisual stream (30) for synchronous terrestrial broadcasting within at least one single-frequency zone, the audiovisual stream being received via at least one link in which the at least one stream audiovisual is multiplexed with at least one other audiovisual stream broadcast by the at least one link, **characterised in that** the device comprises:

- means for filtering from the packets received via the at least one link of the audiovisual packets intended for synchronous terrestrial broadcasting within at least one single-frequency zone,
- means for detecting, from the packets received via the at least one link, packets comprising a counter, calculating the period between two packets comprising a counter and counting packets between the two packets comprising a counter,
- means for time-stamping each packet received based on the calculated period and on the number of packets counted,
- means for packet detection comprising at least one item of information representing a common reference clock,
- means for inserting null packets between each packet comprising at least one item of information representing a common reference clock,
- means for time-stamping each null packet,
- means for replacing each time-stamped null packet by a filtered packet if the null packet has a timestamp greater than or equal to that of the filtered packet received,
- means for updating at least one packet comprising a counter in the audiovisual stream to form an audiovisual stream for synchronous terrestrial broadcasting within at least one single-frequency zone.

20

22

21a | Encodeur S1' |

Multiplexeur et
transmission satellite

21b | Encodeur S2' |

25

21c | Encodeur S3' |

23

Services
Terrestres

10

13

11a | EncodeurT1' |

Mux

15

Etiquetage
temporel

11b | Encodeur T2' |

14

11c | Encodeur T3' |

Insertion
MIP

# Fig. 1a

31 30 | Synchro | 32 | Modulateur OFDM | 33

Fig. 1b

200 — Processeur

202 — RAM

203 — ROM

201

Interface sortie — 205

15

## Fig. 2

300 — Processeur

Interface entrée — 304

302 — RAM

Interface sortie — 305

303 — ROM

301

30

## Fig. 3

E400 — Multiplexage flux(s) Terrestre(s)

E401 — Insertion paquet MIP

E402 — Insertion composant PCR

E403 — Transfert pour diffusion satellite

E404 — Multiplexages flux

E405 — Modification PCR

E406 — Diffusion

# Fig. 4a

E451 — Insertion paquet MIP

E452 — Insertion composant PCR

E453 — Transfert pour diffusion satellite

E454 — Muliplexages flux

E464 — Muliplexages flux

E455 — Modification PCR

E465 — Modification PCR

E456 — Diffusion

E466 — Diffusion

Fig. 4b

E500 — Détection paquet TDT?

E501 — Extraction champ MJD

E502 — Calcul jours écoulés depuis instant prédéterminé

E503 — Calcul rebouclages PCR

E504 — Détection paquet MIP ?

E505 — Extraction champ STS

E506 — Transposition en coup d'horloge 27MHZ

E507 — Initialisation compteur PCR

E508 — Paquet transmis?

E509 — Incrémentation compteur PCR

E510 — Paquet PCR à transmettre?

E511 — Insertion valeur mémorisée dans PCR

## Fig. 5

Fig. 6a

Fig. 6b

E619 Calcul rebouclages PCR

E620 Référence= 1$^{er}$ PCR

E621 Horodatage de chaque paquet

E622 Paquet MIP

E623 Mémorisation contenu paquet

E624 Insertion paquets nuls

E625 Conversion STS en 27MHz

E626 Détermination PCR modulo

E627 Conversion PCR

E628 Horodatage paquet MIP

E629 Détermination heure sortie paquets nuls insérés

## Fig. 6c

E630 — Réception paquet

E631 — Filtrage

E632 — Mémorisation paquet avec heure arrivée

E633 — Paquet nul à heure> paquet mémorisé?

E634 — Insertion dans flux place paquet nul

E635 — Mise à jour champs PCR Paquets insérés

Fig. 6d

E640 — Mise conformité norme

E641 — Transfert

Fig. 6e

E650 — Réception paquet

E651 — Filtrage

E652 — Mémorisation paquet avec heure arrivée

E653 — Paquet nul à heure> paquet mémorisé?

E659 — Réception paquet

E660 — Filtrage

E661 — Mémorisation paquet avec heure arrivée

E662 — Paquet nul à heure> paquet mémorisé?

E654 — Paquets même heure?

E655 — Sélection paquet

E656 — Sélection paquet heure plus ancienne

E657 — Insertion dans flux place paquet nul

E658 — Mise à jour champs PCR Paquets insérés

# Fig. 6f

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2012116743 A1

**Littérature non-brevet citée dans la description**

- *ETSI TS 102 773 V1.1.1,* Septembre 2009